# EUROPEAN PATENT APPLICATION

(11) **EP 4 651 577 A1**
(43) Date of publication of application: **19.11.2025**
(21) Application number: 24757143.3
(22) Date of filing: 08.02.2024
(51) Int. Cl.: H04W 52/02, H04W 76/28, H04W 8/24, H04W 72/23

(54) **METHOD AND APPARATUS FOR ADJUSTING RLC TIMER IN CONSIDERATION OF DTX/DRX OPERATION OF BASE STATION IN WIRELESS COMMUNICATION SYSTEM**

(30) Priority: 16.02.2023 KR 20230020936
(71) Applicant: Samsung Electronics Co., Ltd., Suwon-si, Gyeonggi-do 16677 (KR)
(72) Inventor: SUN, Weiping, Suwon-si Gyeonggi-do 16677 (KR); AGIWAL, Anil, Suwon-si Gyeonggi-do 16677 (KR); BAEK, Sangkyu, Suwon-si Gyeonggi-do 16677 (KR)
(74) Representative: Gulde & Partner
(86) International application number: PCT/KR2024/001923
(87) International publication number: WO 2024/172414

(57) **Abstract**

The disclosure relates to a 5G or 6G communication system for supporting a higher data transmission rate. The method in which a terminal operates in a wireless communication system, according to the present disclosure, comprises the steps of: receiving a terminal capability enquiry message from a base station; in response to the capability enquiry message, transmitting a terminal capability information message to the base station; and receiving an RRC configuration based on the capability information message from the base station, wherein the capability information message includes information on whether the terminal supports the feature of enhanced RLC timer adjustment.

## Description

### [Technical Field]

The disclosure generally relates to a wireless communication system and, more particularly, to a method and an apparatus for adjusting an RLC timer considering a discontinuous transmission (DTX)/discontinuous reception (DRX) operation of a base station in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

The disclosure provides a method and an apparatus for adjusting an RLC timer considering a discontinuous transmission (DTX)/discontinuous reception (DRX) operation of a base station in a wireless communication system, thereby effectively providing a service.

The technical subjects pursued in the disclosure may not be limited to the above-mentioned technical subjects, and other technical subjects which are not mentioned herein may be clearly understood from the following description by those skilled in the art to which the disclosure pertains.

### [Solution to Problem]

An operating method of a UE in a wireless communication system according to an embodiment of the disclosure may include receiving a UE capability enquiry message from a base station, transmitting a UE capability information message to the base station, in response to the capability enquiry message, and receiving a radio resource control (RRC) configuration based on the capability information message from the base station, wherein the capability information message may include information about whether the UE supports an enhanced radio link control (RLC) timer control function.

### [Advantageous Effects of Invention]

According to an embodiment of the disclosure, an apparatus and a method capable of effectively providing services in a wireless communication system can be provided.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 illustrates a structure of a new radio (NR) system according to various embodiments of the disclosure.
FIG. 2 illustrates a radio protocol structure in an NR system according to various embodiments of the disclosure.
FIG. 3 illustrates a cell discontinuous transmission (DTX)/discontinuous reception (DRX) operation for reducing power consumption of a base station according to various embodiments of the disclosure.
FIG. 4 illustrates a network (NW) DTX non-active period according to various embodiments of the disclosure.
FIG. 5 illustrates a NW DRX non-active period according to various embodiments of the disclosure.
FIG. 6 illustrates a method in which an unacknowledged mode (UM) RLC entity controls a t-Reassembly timer considering a NW non-active period according to various embodiments of the disclosure.
FIG. 7 illustrates a method in which a UM RLC entity controls a t-Reassembly timer considering a NW non-active period according to various embodiments of the disclosure.
FIG. 8 illustrates a method in which an acknowledged mode (AM) RLC entity controls a t-Reassembly timer considering a NW non-active period according to various embodiments of the disclosure.
FIG. 9 illustrates a method in which an AM RLC entity controls a t-Reassembly timer considering a NW non-active period according to various embodiments of the disclosure.
FIG. 10 illustrates a method in which an AM RLC entity controls a t-PollRetransmit timer considering a NW non-active period according to various embodiments of the disclosure.
FIG. 11 illustrates a method in which an AM RLC entity controls a t-PollRetransmit timer considering a NW non-active period according to various embodiments of the disclosure.
FIG. 12 illustrates a method in which an AM RLC entity controls a t-StatusProhibit timer considering a NW non-active period according to various embodiments of the disclosure.
FIG. 13 illustrates a method in which an AM RLC entity controls a t-StatusProhibit timer considering a NW non-active period according to various embodiments of the disclosure.
FIG. 14 illustrates a radio resource control (RRC) signaling procedure performed by a UE and a base station to perform an rlcEnhNes-related operation according to various embodiments of the disclosure.
FIG. 15 illustrates a structure of a base station in a wireless communication system according to various embodiments of the disclosure.
FIG. 16 illustrates a structure of a UE in a wireless communication system according to various embodiments of the disclosure.

### [Mode for the Invention]

Hereinafter, exemplary embodiments of the disclosure will be described in detail with reference to the accompanying drawings. It should be noted that, in the accompanying drawings, the same or like elements are designated by the same or like reference signs as much as possible. Also, a detailed description of known functions or configurations that may make the subject matter of the disclosure unnecessarily unclear will be omitted.

In describing the embodiments of the disclosure, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

In the following description, a base station is an entity that allocates resources to terminals, and may be at least one of a Node B, a base station (BS), an eNode B (eNB), a gNode B (gNB), a wireless access unit, a base station controller, and a node on a network. A terminal may include a user equipment (UE), a mobile station (MS), a cellular phone, a smartphone, a computer, or a multimedia system capable of performing a communication function. Furthermore, the embodiments of the disclosure as described below may also be applied to other communication systems having similar technical backgrounds or channel types to the embodiments of the disclosure. Moreover, based on determinations by those skilled in the art, the embodiments of the disclosure may also be applied to other communication systems through some modifications without significantly departing from the scope of the disclosure. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

The following detailed description of embodiments of the disclosure is mainly directed to New RAN (NR) as a radio access network and Packet Core (5G system or 5G core network or next generation core (NG Core)) as a core network in the 5G mobile communication standards specified by the 3rd generation partnership project (3GPP) that is a mobile communication standardization group, but based on determinations by those skilled in the art, the main idea of the disclosure may be applied to other communication systems having similar backgrounds through some modifications without significantly departing from the scope of the disclosure. In the following description, terms for identifying access nodes, terms referring to network entities or network functions (NFs), terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, some of terms and names defined in the 3rd generation partnership project (3GPP) long term evolution (LTE) standards and/or 3GPP new radio (NR) standards may be used for the sake of descriptive convenience. However, the disclosure is not limited by these terms and names, and may be applied in the same way to systems that conform other standards.

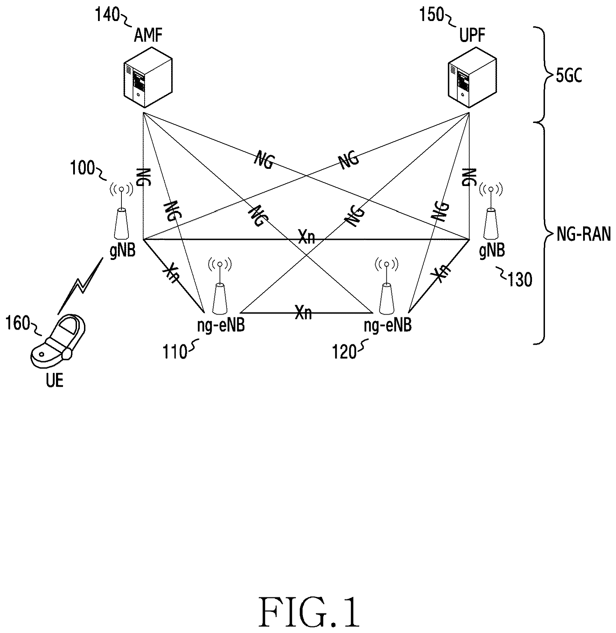

FIG. 1 illustrates a structure of an NR system according to various embodiments of the disclosure.

Referring to FIG. 1, a wireless communication system may include multiple base stations (for example, a gNB 100, an ng-eNB 110, an ng-eNB 120, and a gNB 130), an access and mobility management function (AMF) 140, and a user plane function (UPF) 150. Of course, the wireless communication system is not limited by the structure illustrated in FIG. 1, and may include a larger or smaller number of components than those in the structure illustrated in FIG. 1.

According to various embodiments of the disclosure, a user equipment (hereinafter UE or terminal) 160 may access an external network via the base stations 100, 110, 120, and 130 and the UPF 150.

In FIG. 1, the base stations 100, 110, 120, and 130 may provide radio access to UEs that access the network as cellular network access nodes. For example, in order to service users' traffic, the base stations 100, 110, 120, and 130 may collect state information, such as the UEs' buffer states, available transmission power states, and channel states, and perform scheduling accordingly, thereby supporting connections between the UEs and the core network (CN; in particular, CN in NR is referred to as "5GC" ).

In FIG. 1, the gNBs 100 and 130 may control multiple cells and employ an adaptive modulation & coding (hereinafter referred to as AMC) scheme for determining a modulation scheme and a channel coding rate according to a channel state of a UE.

The core network is a device responsible for various control functions as well as a mobility management function for UEs, and may be connected to multiple base stations. Also, the 5GC may interwork with the existing LTE system.

A wireless communication system may be divided into a user plane (UP) associated with actual user data transmission and a control plane (CP) such as connection management. In FIG. 1, the gNB 100 and gNB 130 may use UP and CP technology defined in the NR technology, and although connected to the 5GC, the ng-eNB 110 and ng-eNB 120 may use UP and CP technology defined in the long term evolution (LTE) technology.

The AMF 140 is a device responsible for various control functions as well as a mobility management function for a UE, and may be connected to multiple base stations.

The UPF 150 may refer to a type of gateway device for providing data transmission. Although not illustrate in FIG. 1, the NR wireless communication system may include a session management function (SMF). The SMF may manage a packet data network connection such as a protocol data unit (PDU) session provided to the UE.

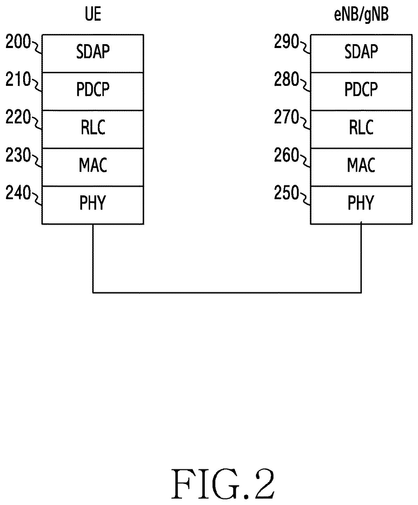

FIG. 2 illustrates a radio protocol structure in an NR system according to various embodiments of the disclosure.

Referring to FIG. 2, a radio protocol of an NR system may include a service data adaptation protocol (SDAP) 200 or 290, a packet data convergence protocol (PDCP) 210 or 280, a radio link control (RLC) 220 or 270, a medium access control (MAC) 230 or 260, and physical (PHY) 240 or 250 on each of UE and gNB sides.

The SDAP 200 or 290 may transfer user data, and may perform an operation for mapping a QoS flow to a specific DRB for both uplink and downlink, and operation for marking a QoS flow ID for both uplink and downlink, and an operation for mapping a reflective QoS flow to a data bearer for uplink SDAP PDUs. An SDAP configuration corresponding to each DRB may be provided from a higher RRC layer. Of course, the examples given above are not limiting.

The PDCP 210 or 280 may serve to perform operations such as IP header compression/reconstruction. Also, the PDCP 210 or 280 may provide an in-sequence delivery function, an out-of-sequence delivery function, a reordering function, a retransmission function, and a ciphering and deciphering function. Obviously, the examples given above are not limiting.

The RLC 220 or 270 may reconfigure a radio link control PDU into appropriate sizes. Also, the RLC 220 or 270 may provide an in-sequence delivery function, an out-of-sequence delivery function, an automatic repeat request (ARQ) function, a concatenation, segmentation, and reassembly function, a re-segmentation function, a reordering function, a duplicate detection function, and an error detection function. Obviously, the examples given above are not limiting.

The MAC 230 or 260 may be connected to several RLC layer devices configured in a single UE, and multiplex RLC PDUs into an MAC PDU and demultiplex RLC PDUs from an MAC PDU. Also, the MAC 230 or 260 may provide a mapping function, a scheduling information reporting function, an HARQ function, a priority handling function between logical channels, a priority handling function between UEs, an MBMS service identification function, a transport format selection function, and a padding function. Obviously, the examples given above are not limiting.

A physical (PHY) layer 240 or 250 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer. For additional error correction, the PHY layer also uses hybrid ARQ (HARQ), and a receiving end uses one bit to transmit whether a packet transmitted by a transmitting end is received. This 1-bit information is referred to as HARQ AQCK/NACK information.

In the case of LTE, downlink HARQ ACK/NACK information in response to uplink data transmission may be transmitted via a physical ARQ indicator channel (PHICH), and in the case of NR, whether retransmission is required or new transmission is to be performed may be determined through UE scheduling information via a physical dedicated control channel (PDCCH) that is a channel via which downlink/uplink resource allocation and the like are transmitted. This is because asynchronous HARQ is applied in NR. Uplink HARQ ACK/NACK information in response to downlink data transmission may be transmitted via a physical uplink control channel (PUCCH) or a physical uplink shared channel (PUSCH). The PUCCH is generally transmitted in an uplink of a PCell as described below, but if supported by a UE, a base station may also additionally transmit the same to the corresponding UE in an SCell as described below, which is referred to as a PUCCH SCell.

Although not illustrated in FIG. 2, a radio resource control (RRC) layer may exist as a higher layer than each PDCP layer of the UE and the base station, and the RRC layer may exchange access/measurement-related configuration control messages for radio resource control.

The PHY layer may include one or multiple frequencies/carriers, and a technology for simultaneously configuring and using multiple frequencies is referred to as carrier aggregation (hereinafter CA). The CA refers to a technology in which, instead of using only one carrier for communication between a terminal (or UE) and a base station (eNB or gNB), one primary carrier and one or multiple secondary carriers are additionally used and thus data capacity may be greatly increased as much as the number of secondary carriers. Meanwhile, a cell in a base station, which uses the primary carrier, is referred to as a primary cell or PCell, and a cell in a base station, which uses the secondary subcarriers, is referred to as a secondary cell or SCell.

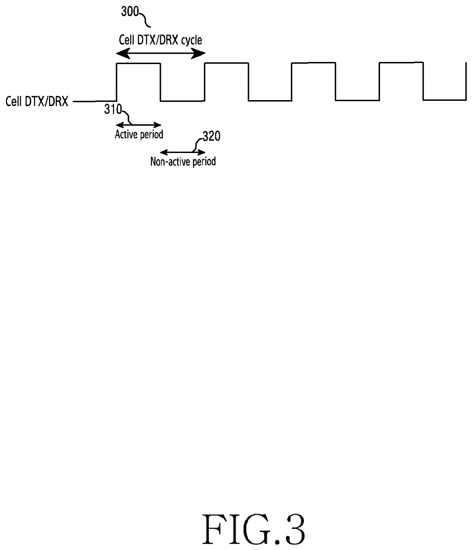

FIG. 3 illustrates a cell DTX/DRX operation for reducing power consumption of a base station according to various embodiments of the disclosure.

In a mobile communication system, a base station needs to provide services to a plurality of UEs within a service area, and thus power consumption thereof is considerable. Therefore, network energy saving (NES) technologies for reducing power consumption of a base station are being discussed. For example, the following candidate technologies are being proposed in NR.
> Cell DTX/DRX
> NES-aware CHO
> SSB-less/SIB-less cell
> Cell (re)selection enhancement
> UE wake-up signal (WUS)
> UE assistance information for NES

Among the foregoing candidate technologies, cell DTX/DRX is a technology of periodically turning on or off data transmission and reception of a base station. Cell DTX is a technology of turning on/off data transmission by a base station in a downlink, and cell DRX is a technology of turning on/off data reception by a base station in an uplink. During a time period when the base station turns off data transmission and reception, power consumption of the base station may be significantly reduced.

Referring to FIG. 3, when cell DTX or cell DRX is executed, the base station may perform a predetermined operation corresponding to a period in each cell DTX or cell DRX cycle 300 including an active period 310 and a non-active period 320. In the active period, the base station may perform normal operations to provide a service to an existing UE. In the non-active period, the base station may generally turn off data transmission and reception, in which the following base station operation options may be considered specifically.
> Option 1: The gNB is expected to turn off all transmission and reception for data traffic and reference signals during cell DTX/DRX non-active periods
> Option 2: The gNB is expected to turn off transmission and/or reception only for data traffic during cell DTX/DRX non-active periods (i.e., the gNB will still transmit and/or receive reference signals)
> Option 3: The gNB is expected to turn off dynamic data transmission and/or reception during cell DTX/DRX non-active periods (i.e., the gNB is expected to still perform transmission and/or reception in periodic resources including an SPS, a CG-PUSCH, an SR, an RACH, and an SRS)
> Option 4: The gNB is expected to transmit only reference signals (e.g., a CSI-RS for measurement)

Therefore, the base station may not transmit and/or receive data in the non-active period of the cell DTX/DRX. In an embodiment of the disclosure, the base station may transmit DTX/DRX-related configuration information on a specific cell to a UE through an RRC message. After receiving the DTX/DRX-related configuration information on the specific cell in an RRC layer, the UE may transmit the DTX/DRX-related configuration information on the specific cell to a lower layer (e.g., at least one of PDCP, RLC, MAC, or PHY layers) through internal signaling. In an embodiment of the disclosure, after receiving the DTX/DRX configuration information on the specific cell, the UE may configure a DTX/DRX-related timer of the cell, based on the configuration information. In an embodiment of the disclosure, the cell DTX/DRX-related timer managed by the UE may be a timer indicating the remaining time of an active period or a non-active period.

In an embodiment of the disclosure, the UE may determine the start of the DTX/DRX non-active period of the specific cell in view of the status of the DTX/DRX timer of the cell. For example, when the cell DTX/DRX timer is an active period timer, the expiry time of the timer may be the start time of the non-active period. In another example, when the cell DTX/DRX timer is the non-active period timer, the start time of the timer may be the start time of the non-active period.

Although the disclosure illustrates the operation of an RLC layer of the UE for illustration, the operation of the RLC layer proposed in the disclosure may also be applied to an RLC layer of the base station.

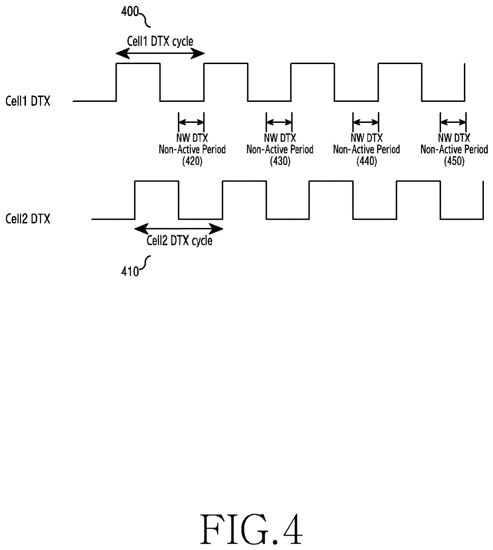

FIG. 4 illustrates a network (NW) DTX non-active period according to various embodiments of the disclosure.

When there is one cell associated with an RLC entity of a UE, a NW DTX non-active period may be the same as a DTX non-active period of the cell. When there is a plurality of cells associated with the RLC entity of the UE (e.g., in CA), the NW DTX non-active period may indicate a period in which DTX non-active periods of all cells associated with the RLC entity overlap.

Referring to FIG. 4, when there are two cells (e.g., indicated as cell 1 and cell 2) associated with the RLC entity of the UE, a period in which a non-active period of a DTX cycle 400 of cell 1 and a non-active period of a DTX cycle 410 of cell 2 overlap may be indicated as a NW DTX non-active period 420, 430, 440, and 450. This embodiment shows a case in which there are two associated cells, but a period in which DTX non-active periods of all associated cells overlap may be indicated as a NW DTX non-active period by applying the same criteria even if there are two or more associated cells.

The RLC entity of the UE may predict that downlink data reception is impossible in the NW DTX non-active period. A NW DTX non-active period of a specific RLC entity may exist when all associated cells apply cell DTX.

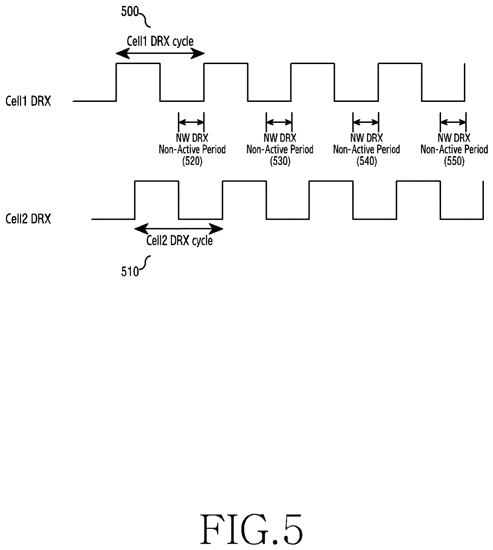

FIG. 5 illustrates a NW DRX non-active period according to various embodiments of the disclosure

When there is one cell associated with an RLC entity of a UE, a NW DRX non-active period may be the same as a DRX non-active period of the cell. When there is a plurality of cells associated with the RLC entity (e.g., in CA), the NW DRX non-active period may indicate a period in which DRX non-active periods of all cells associated with the RLC entity overlap.

Referring to FIG. 5, when there are two cells (e.g., indicated as cell 1 and cell 2) associated with the RLC entity, a period in which a non-active period of a DRX cycle 500 of cell 1 and a non-active period of a DRX cycle 510 of cell 2 overlap may be indicated as a NW DRX non-active period 520, 530, 540, and 550. This embodiment shows a case in which there are two associated cells, but a period in which DRX non-active periods of all associated cells overlap may be indicated as a NW DRX non-active period by applying the same criteria even if there are two or more associated cells.

The RLC entity of the UE may predict that uplink data transmission to a base station is impossible in the NW DRX non-active period. A NW DRX non-active period of a specific RLC entity may exist when all associated cells apply cell DRX.

In the disclosure, one NW non-active period may correspond to at least one of the following examples:
> One continuous NW DTX non-active period
> One continuous NW DRX non-active period
> Overlapped period of one NW DTX non-active period and one NW DRX non-active period
> Continuous period formed by a time period in which a NW is in a NW DTX non-active state, in a NW DRX non-active state, or simultaneously in the NW DTX non-active and NW DRX non-active states

In an operation performed by an unacknowledged mode (UM) RLC entity when receiving a new RLC UMD (UM data or UM mode data) PDU from a lower layer (e.g., at least one of MAC or PHY layers), a relevant variable and timer may be as follows.
> RX_NEXT_Reassembly: holds the earliest sequence number (SN) that waits (or is still considered) for reassembly.
> RX_Timer_Trigger: holds a SN following a SN which triggered t-reassembly.
> RX_NEXT_Highest: holds a SN following the highest SN among received UMD PDUs, and serves as the highest edge of a reassembly window.
> t-Reassembly: used by the receiving side of an UM/acknowledged mode (AM) RLC entity to detect loss of RLC PDUs at a lower layer (A timer for identifying whether RLC UMD PDUs are at the lower layer (e.g., at least one of the MAC or PHY layers), which is triggered to distinguish whether reception of discontinuous SNs is caused by loss of RLC UMD PDUs at the lower layer (e.g., at least one of the MAC or PHY layers) or is an out-of-sequence phenomenon due to a lower-layer operation (e.g., HARQ reordering) when the discontinuous SNs are received. When discontinuity of SNs within a specific range is still detected after t-Reassembly expires, the discontinuity may be regarded as loss of RLC UMD PDUs at the lower layer (e.g., at least one of the MAC or PHY layers).
> Reassembly window: a window for reassembly. Whether a specific SN belongs to the reassembly window may be determined according to the following conditions.
   >> A SN falls within the reassembly window if (RX_Next_Highest - UM_Window_Size) <= SN<RX_Next_Highest.
   >> A SN falls outside of the reassembly window otherwise.

When receiving the new RLC UMD PDU from the lower layer (e.g., at least one of the MAC or PHY layers), the UM RLC entity may discard the RLC UMD PDU if the SN of the received RLC UM PDU satisfies (RX_NEXT_Highest - UM_Window_Size) <= SN <RX_Next_Reassembly, and may store the RLC UMD PDU in a receive buffer if the SN does not satisfy the foregoing condition.

When a new RLC UMD PDU with a SN of x enters the receive buffer, if all bytes of an RLC SDU with the SN are received, the UM RLC entity may transmit the RLC SDU to an upper layer (e.g., at least one of SDAP or PDCP layers). In this case, the UM RLC entity may operate as follows.
> If x is equal to RX_Next_Reassembly, RX_Next_Reassembly may be configured to "the SN of the first SN > current RX_Next_Reassembly that has not been reassembled and delivered to upper layer."
> If x falls outside the reassembly window,
   >> RX_Next_Highest may be configured to x + 1.
   >> All RLC UMD PDUs outside the reassembly window among RLC UMD PDUs stored in the receive buffer, may be discarded.
   >> If RX_Next_Reassembly does not fall within the reassembly window,
      >>> RX_Next_Reassembly may be configured to "the first SN >= (RX_Next_Highest - UM_Window_size) that has not been reassembled and delivered to upper layer."

An example of an operation of the UM RLC entity in each state of t-Reassembly may be as follows.
> If t-Reassembly is running
   >> If RX_Timer_Trigger <= RX_Next_Reassembly or
   >> If RX_Timer_Trigger falls outside the reassembly window and RX_Timer_Trigger is not equal to RX_Next_Highest or
   >> If RX_Next_Highest = RX_Next_Reassembly + 1 and there is no missing byte segment before the last byte of all received segments of RX_Next_Reassembly
      >>> Stop and reset t-Reassembly;
> If t-Reassembly is not running (including the case where t-Reassembly is stopped due to the above operations)
   >> If RX_Next_Highest>RX_Next_Reassembly + 1 or
   >> If RX_Next_Highest = RX_Next_Reassembly + 1 and there is at least one missing byte segment before the last byte of all received segments of RX_Next_Reassembly byte segments
      >>> Start t-Reassembly, and set RX_Timer_Trigger to RX_Next_Highest
> Operations when t-Reassembly expires
   >> Update RX_Next_Reassembly to the first SN >= RX_Timer_Trigger that has not been reassembled
   >> Discard all segments with SN < updated RX_Next_Reassembly
   >> If RX_Next_Highest>RX_Next_Reassembly + 1 or
   >> If RX_Next_Highest = RX_Next_Reassembly + 1 and there is at least one missing byte segment before the last byte of all received segments of RX_Next_Reassembly
      >>> Start t-Reassembly, and set RX_Timer_Trigger to RX_Next_Highest

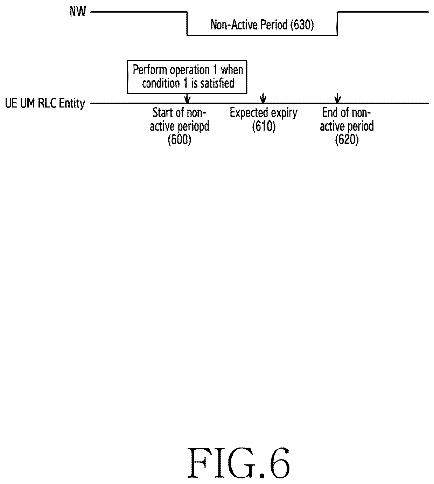

FIG. 6 illustrates a method in which a UM RLC entity controls a t-Reassembly timer considering a NW non-active period according to various embodiments of the disclosure.

Referring to FIG. 6, when a t-Reassembly timer is running or newly starts at the start time 600 of a NW non-active period 630, if condition 1 is satisfied, a UM RLC entity of a UE may perform operation 1. Operation 1 may include at least one of the following procedures.
> Stop and reset t-Reassembly
> Update RX_Next_Reassembly to the first SN >= RX_Timer_Trigger that has not been reassembled
> Discard all segments with SN < updated RX_Next_Reassembly
> If RX_Next_Highest>RX_Next_Reassembly + 1 or
> If RX_Next_Highest = RX_Next_Reassembly + 1 and there is at least one missing byte segment before the last byte of all received segments of RX_Next_Reassembly
   >> Start t-Reassembly
   >> Set RX_Timer_Trigger to RX_Next_Highest

Condition 1 may include at least one of the following conditions.
> The RLC entity of the UE is configured to perform rlcEnhNes.
> The expected expiry time of the t-Reassembly timer falls within the NW non-active period 630. For example, start time 600 of NW non-active period 630 <= expected expiry time 610 of t-Reassembly timer <= end time 620 of NW non-active period 630 is satisfied.
> The length of the NW non-active period 630 is greater than (or equal to or greater than) threshold 1.
> The length of the NW non-active period 630 is less than (or less than or equal to) threshold 1.

When a specific NW non-active period is maintained until the expected expiry time of the t-Reassembly timer running at the start time of the NW non-active period, the UM RLC entity of the UE may predict that the UM RLC entity of the UE is unable to receive a new RLC UMD PDU from a lower layer (e.g., at least one of MAC or PHY layers) until the t-Reassembly timer expires, and may terminate the t-Reassembly in advance. Further, the UM RLC entity of the UE may perform a specific operation (e.g., a "Discard all segments with SN < updated RX_Next_Reassembly" operation) in advance by terminating the t-Reassembly in advance, thereby securing a memory space of the UE in advance.

The UM RLC entity may perform operation 1 at the start time 600 of the NW non-active period 630, thereby restarting the t-Reassembly timer. Here, when condition 1 is satisfied, the UM RLC entity may perform operation 1 at the start time 600 of the corresponding NW non-active period 630. That is, when t-Reassembly restarts due to operation 1, operation 1 may be performed again if condition 1 is satisfied.

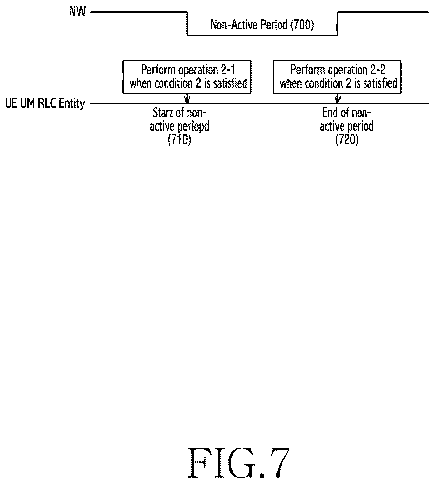

FIG. 7 illustrates a method in which a UM RLC entity controls a t-Reassembly timer considering a NW non-active period according to various embodiments of the disclosure.

Referring to FIG. 7, when a t-Reassembly timer is running or newly starts at the start time 700 of a NW non-active period 700, if condition 2 is satisfied, a UM RLC entity of a UE may perform operation 2. Operation 2 may include at least one of the following procedures.
> Operation 2-1: Suspend a t-Reordering timer if the t-Reordering timer is running or starts when the NW non-active period starts (710)
> Operation 2-2: Resume the t-Reordering timer if the t-Reordering timer is suspended when the NW non-active period ends (720)
> Condition 2 may include at least one of the following conditions.
> The RLC entity is configured to perform rlcEnhNes.
> The length of the NW non-active period is greater than (or equal to or greater than) threshold 2.
>The length of the NW non-active period is less than (or less than or equal to) threshold 2.

The t-Reassembly timer managed by the UM RLC entity of the UE may be a timer executed to determine whether reception of discontinuous SNs of RLC UMD PDUs is caused by loss at a lower layer (e.g., at least one of MAC or PHY layers) or is a temporary out-of-order phenomenon due to a lower-layer operation (e.g., an HARQ operation) when the discontinuous SNs are received. Therefore, the size of the t-Reassembly timer may be configured considering a characteristic of the lower-layer operation, such as HARQ. By suspending the t-Reassembly timer in the NW non-active period, the size of the t-Reassembly timer may reflect the characteristic of the lower-layer operation, such as HARQ.

In an embodiment of the disclosure, the operation of the UM RLC entity in each state of t-Reassembly may be changed as follows.
> If t-Reassembly is not running and not suspended (including a case where t-Reassembly is stopped due to the above operations)
   >> If RX_Next_Highest>RX_Next_Reassembly + 1 or
   >> If RX_Next_Highest = RX_Next_Reassembly + 1 and there is at least one missing byte segment before the last byte of all received segments of RX_Next_Reassembly
      >>> Start t-Reassembly, and set RX_Timer_Trigger to RX_Next_Highest

According to an embodiment of the disclosure, in an operation performed by an AM RLC entity when receiving a new RLC AMD (AM data or AM mode data) PDU from a lower layer (e.g., at least one of MAC or PHY layers), a relevant variable and timer may be as follows.
> RX_Next: holds a SN following the last in-sequence completely received RLC SDU, and serves as a lower edge of an RX window
> RX_Next_Status_Trigger: holds a SN following the SN of an RLC SDU which has triggered t-Reassembly
> RX_Highest_Status: holds the highest possible SN indicatable by "ACK_SN" when a STATUS PDU needs to be constructed
> RX_Next_Highest: holds a SN following the highest SN among received RLC SDUs
> t-PollRetransmit: used by the transmitting side of an AM RLC entity to retransmit a poll
> t-Reassembly: used by the receiving side of an AM RLC entity to detect loss of RLC PDUs at a lower layer
> t-StatusProhibit: used by the receiving side of an AM RLC entity to prohibit transmission of a STATUS PDU

According to an embodiment of the disclosure, an operation of the AM RLC entity in each state of t-Reassembly may be as follows.
> If t-Reassembly is running
   >> If RX_Next_Status_Trigger = RX_Next or
   >> IfRX_Next_Status_Trigger = RX_Next + 1 and there is no missing byte segment before the last byte of all received segments of RX_Next or
   >> If RX_Next_Status_Trigger falls outside the RX window and RX_Next_Status_Trigger is not equal to RX_Next + AM_Window_Size
      >>> Stop and reset t-Reassembly
> If t-Reassembly is not running
   >> If RX_Next_Highest>RX_Next+ 1 or
   >> If RX_Next_Highest = RX_Next + 1 and there is at least one missing byte segment before the last byte of all received segments of RX_Next
      >>> Start t-Reassembly, and set RX_Next_Status_Trigger to RX_Next_Highest
> Operations when t-Reassembly expires
   >> Update RX_Highest_Status to the first SN >= RX_Next_Status_Trigger for which not all bytes have been received
   >> If RX_Next_Highest>RX_Highest_Status + 1 or
   >> If RX_Next_Highest = RX_Highest_Status + 1 and there is at least one missing byte segment before the last byte of all received segments of RX_Highest_Status
      >>> Start t-Reassembly, and set RX_Next_Status_Trigger to RX_Next_Highest

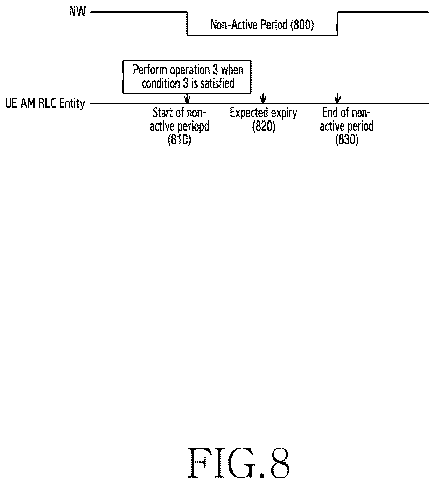

FIG. 8 illustrates a method in which an AM RLC entity controls a t-Reassembly timer considering a NW non-active period according to various embodiments of the disclosure.

Referring to FIG. 8, when a t-Reassembly timer is running or newly starts at the start time 810 of a NW non-active period 800, if condition 3 is satisfied, an AM RLC entity of a UE may perform operation 3. Operation 3 may include at least one of the following procedures.
> Stop and reset t-Reassembly
> Trigger STATUS reporting
> Update RX_Highest_Status to the first SN >= RX_Next_Status_Trigger for which not all bytes have been received
> If RX_Next_Highest>RX_Highest_Status + 1 or
> If RX_Next_Highest = RX_Highest_Status + 1 and there is at least one missing byte segment before the last byte of all received segments of RX_Highest_Status
   >> Start t-Reassembly(start t-Reassembly)
   >> Set RX_Next_Status_Trigger to RX_Next_Highest

Condition 3 may include at least one of the following conditions.
> The RLC entity is configured to perform rlcEnhNes.
> The expected expiry time of the t-Reassembly timer falls within the NW non-active period 800. For example, start time 810 of NW non-active period 800 <= expected expiry time 820 of t-Reassembly timer <= end time 830 of NW non-active period 800 may be satisfied.
   >> The length of the NW non-active period 800 is greater than (or equal to or greater than) threshold 3.
>The length of the NW non-active period 800 is less than (or less than or equal to) threshold 3.

When a specific NW non-active period is maintained until the expected expiry time of the t-Reassembly timer running at the start time of the NW non-active period, the AM RLC entity of the UE may predict that the AM RLC entity of the UE is unable to receive a new RLC AMD PDU from a lower layer (e.g., at least one of MAC or PHY layers) until the running t-Reassembly timer expires, and may terminate the running t-Reassembly in advance. Further, the AM RLC entity of the UE may perform an operation such as "trigger STATUS reporting" in advance by terminating the t-Reassembly in advance, thereby reporting a reception status of the AM RLC entity to a NW in advance.

The AM RLC entity may perform operation 3 at the start time 810 of the NW non-active period 800, thereby restarting the t-Reassembly timer. Here, when condition 3 is satisfied, the AM RLC entity may perform operation 3 at the start time 810 of the NW non-active period 800. That is, when t-Reassembly restarts due to operation 3, operation 3 may be performed again if condition 3 is satisfied. When operation 3 is repeatedly performed, trigger STATUS reporting may be performed only once at the time.

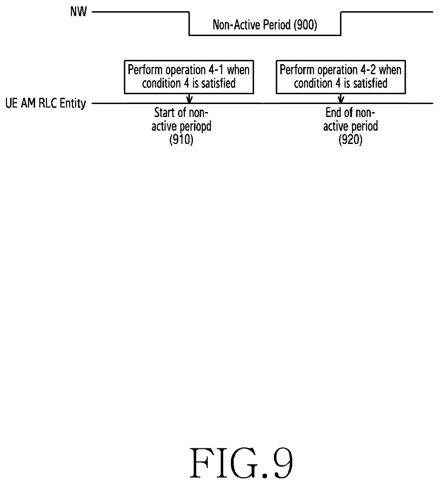

FIG. 9 illustrates a method in which an AM RLC entity controls a t-Reassembly timer considering a NW non-active period according to various embodiments of the disclosure.

Referring to FIG. 9, when a t-Reassembly timer is running or newly starts at the start time 910 of a NW non-active period 900, if condition 4 is satisfied, an AM RLC entity may perform operation 4. Operation 4 may include at least one of the following procedures.
> Operation 4-1: Suspend a t-Reordering timer if the t-Reordering timer is running or starts when the NW non-active period starts (910)
> Operation 4-2: Resume the t-Reordering timer if the t-Reordering timer is suspended when the NW non-active period ends (920)

Condition 4 may include at least one of the following conditions.
> The RLC entity is configured to perform rlcEnhNes.
   >> The length of the NW non-active period is greater than (or equal to or greater than) threshold 4.
>The length of the NW non-active period is less than (or less than or equal to) threshold 4.

The t-Reassembly timer managed by the AM RLC entity of the UE may be a timer executed to determine whether reception of discontinuous SNs of RLC AMD PDUs is caused by loss at a lower layer (e.g., at least one of MAC or PHY layers) or is a temporary out-of-order phenomenon due to a lower-layer operation (e.g., an HARQ operation) when the discontinuous SNs are received. Therefore, the size of the t-Reassembly timer may be configured considering a characteristic of the lower-layer operation, such as HARQ. By suspending the t-Reassembly timer in the NW non-active period, the size of the t-Reassembly timer may reflect the characteristic of the lower-layer operation, such as HARQ.

In an embodiment of the disclosure, the operation of the AM RLC entity in each state of t-Reassembly may be changed as follows.
> If t-Reassembly is not running and not suspended
   >> If RX_Next_Highest>RX_Next+ 1 or
   >> If RX_Next_Highest = RX_Next + 1 and there is at least one missing byte segment before the last byte of all received segments of RX_Next:
      >>> Start t-Reassembly, and set RX_Next_Status_Trigger to RX_Next_Highest

In an embodiment of this disclosure, the AM RLC entity may transmit an AMD PDU including a poll to a peer AM RLC entity, thereby enabling the peer AM RLC entity to trigger STATUS reporting. In an embodiment of the disclosure, when forwarding (or transmitting) the AMD PDU including the poll to the lower layer (e.g., at least one of the MAC or PHY layers), the AM RLC entity may perform an operation illustrated below.
> Set POLL_SN to the highest SN submitted to the lower layer
> If t-PollRetransmit is not running
   >> Start t-PollRetransmit
> Else
   >> Restart t-PollRetransmit

In an embodiment of the disclosure, when receiving a STATUS report transmitted by the peer AM RLC entity, the AM RLC entity may operate as illustrated below.
> If the STATUS report includes a positive or negative ACK for the RLC SDU with a SN equal to POLL_SN
   >> If t-PollRetransmit is running
      >>> Stop and reset t-PollRetransmit

In an embodiment of the disclosure, when the t-PollRetransmit timer expires, the AM RLC entity may operate as illustrated below:
If both a tx buffer and a retx buffer are empty (excluding a transmitted RLC SDU/segment awaiting an ACK) or
> If no new RLC SDU or RLC SDU segment can be transmitted (e.g., due to window stalling),
   >> Consider the RLC SDU with the highest SN among the RLC SDUs submitted to the lower layer for retx or
   >> Consider any RLC SDU which has not been positively acked for retx;
> Include a poll in an AMD PDU

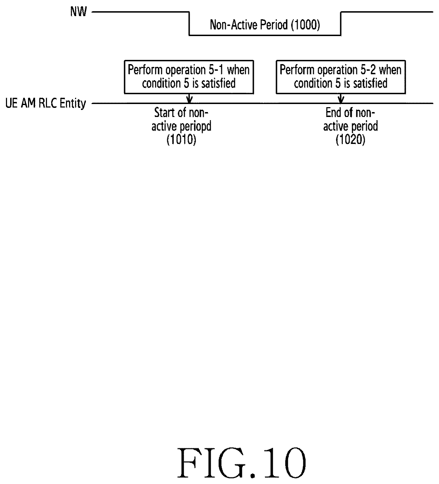

FIG. 10 illustrates a method in which an AM RLC entity controls a t-PollRetransmit timer considering a NW non-active period according to various embodiments of the disclosure.

Referring to FIG. 10, when a t-PollRetransmit timer is running or newly starts at the start time 1010 of a NW non-active period 1000, if condition 5 is satisfied, an AM RLC entity of a UE may perform operation 5. Operation 5 may include at least one of the following procedures.
> Operation 5-1: Suspend the t-PollRetransmit timer if the t-PollRetransmit timer is running or starts when the NW non-active period starts (1010)
> Operation 5-2: Resume the t-PollRetransmit timer if the t-PollRetransmit timer is suspended when the NW non-active period ends (1020)
> Condition 5 may include at least one of the following conditions.
> The RLC entity is configured to perform rlcEnhNes.
> The length of the NW non-active period is greater than (or equal to or greater than) threshold 5.
> The length of the NW non-active period is less than (or less than or equal to) threshold 5.

The t-PollRetransmit timer managed by the AM RLC entity of the UE may be used for retransmitting a poll when a peer AM RLC entity fails to receive a poll while the t-PollRetransmit timer is running. When the peer AM RLC entity transmits a STATUS report to the AM RLC entity of the UE after receiving a poll, the AM RLC entity of the UE may recognize that the peer AM RLC entity has received the poll, and may terminate the t-PollRetransmit timer. However, when the peer AM RLC entity has received a poll but is unable to transmit a STATUS report due to the NW non-active period, retransmitting a poll may be ineffective while only increasing additional overhead. Therefore, in the NW non-active period, the t-PollRetransmit may be suspended to reduce overhead caused by poll retransmission.

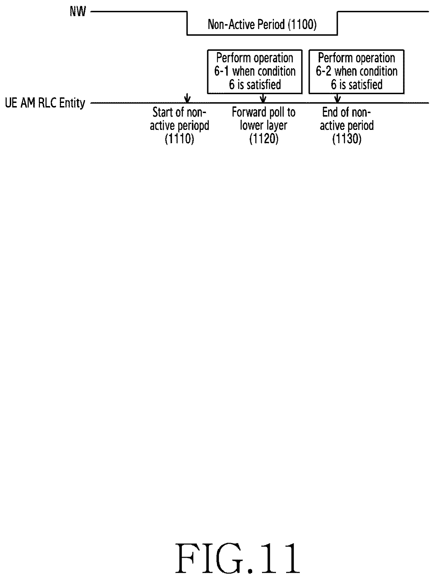

FIG. 11 illustrates a method in which an AM RLC entity controls a t-PollRetransmit timer considering a NW non-active period according to various embodiments of the disclosure.

Referring to FIG. 11, in a NW non-active period 1100, when an AM RLC entity of a UE transmits an RLC AMD PDU including a poll to a lower layer (e.g., at least one of MAC or PHY layers), if condition 6 is satisfied, the AM RLC entity of the UE may perform operation 6. In an embodiment of the disclosure, condition 6 may include at least one of the following conditions.
> The RLC entity is configured to perform rlcEnhNes.
> The time of transmitting the RLC AMD PDU including the poll to the lower layer (e.g., at least one of the MAC or PHY layers) falls within the NW non-active period.
> When the time of transmitting the RLC AMD PDU including the poll to the lower layer (e.g., at least one of the MAC or PHY layers) falls within the NW non-active period, the remaining time of the NW non-active period is greater than (or equal to or greater than) threshold 6.
> When the time of transmitting the RLC AMD PDU including the poll to the lower layer (e.g., at least one of the MAC or PHY layers) falls within the NW non-active period, the remaining time of the NW non-active period is less than (or less than or equal to) threshold 6.

In an embodiment of the disclosure, operation 6 may include at least one of the following procedures.
> Operation 6-1: Upon submission of the AMD PDU including the poll to the lower layer (1120), the transmitting side of the AM RLC entity shall
   >> Set POLL_SN to the highest SN submitted to the lower layer
   >> If t-PollRetransmit is not running and not suspended
      >>> Start and immediately suspend t-PollRetransmit
   >> Else (running or suspended)
      >>> Restart and immediately suspend t-PollRetransmit
> Operation 6-2: If t-PollRetransmit is suspended at the end 1130 of the NW non-active period
   >> Resume t-PollRetransmit

In an embodiment of the disclosure, when the AM RLC entity receives a poll from a peer AM RLC entity or when t-Reassembly expires, STATUS reporting may be triggered. For example, after STATUS reporting is triggered, the AM RLC entity may operate as illustrated below.
> If t-StatusProhibit is not running
   >> Construct a STATUS_PDU and submit the same to the lower layer at a first transmission opportunity indicated by the lower layer
> else(if t-StatusProhibit is running)
   >> Construct a single STATUS_PDU even if status reporting is triggered several times while t-StatusProhibit is running and submit the same to the lower layer at the first transmission opportunity indicated by the lower layer after t-StatusProhibit expires

In an embodiment of the disclosure, after transmitting the STATUS PDU to the lower layer (e.g., at least one of the MAC or PHY layers), the AM RLC entity may operate as follows.
> Start t-StatusProhibit

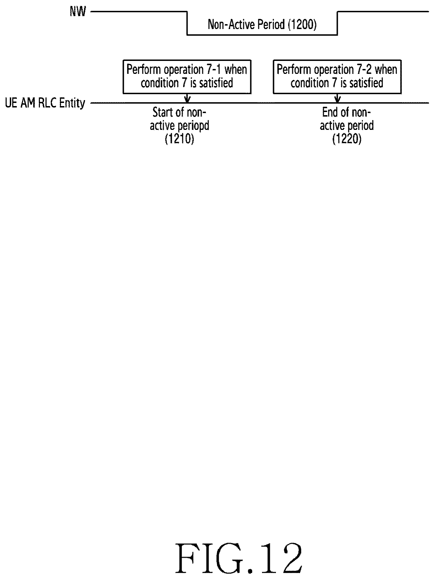

FIG. 12 illustrates a method in which an AM RLC entity controls a t-StatusProhibit timer considering a NW non-active period according to various embodiments of the disclosure.

Referring to FIG. 12, when a t-StatusProhibit timer is running or newly starts at the start time 1210 of a NW non-active period 1200, if condition 7 is satisfied, an AM RLC entity of a UE may perform operation 7. Operation 7 may include at least one of the following procedures.
> Operation 7-1: Suspend the t-StatusProhibit timer if the t-StatusProhibit timer is running or starts when the NW non-active period starts (1210)
> Operation 7-2: Resume the t-StatusProhibit timer if the t-StatusProhibit timer is suspended when the NW non-active period ends (1220)
> Condition 7 may include at least one of the following conditions.
> The RLC entity is configured to perform rlcEnhNes.
> The length of the NW non-active period is greater than (or equal to or greater than) threshold 7.
> The length of the NW non-active period is less than (or less than or equal to) threshold 7.

The t-StatusProhibit timer managed by the AM RLC entity of the UE may be used to prohibit transmission of a STATUS PDU while the t-StatusProhibit timer is running in order to prevent unnecessary retransmissions caused by frequent transmissions of a STATUS PDU in view of a round trip time (RTT). When the RTT is increased due to occurrence of the NW non-active period, the t-StatusProhibit timer may need to be modified to reflect the RTT in an actual active period by excluding the NW non-active period from a timer execution time. Therefore, the foregoing purpose may be achieved by suspending the t-StatusProhibit timer at the start of the NW non-active period and resuming the t-StatusProhibit timer at the end of the NW non-active period.

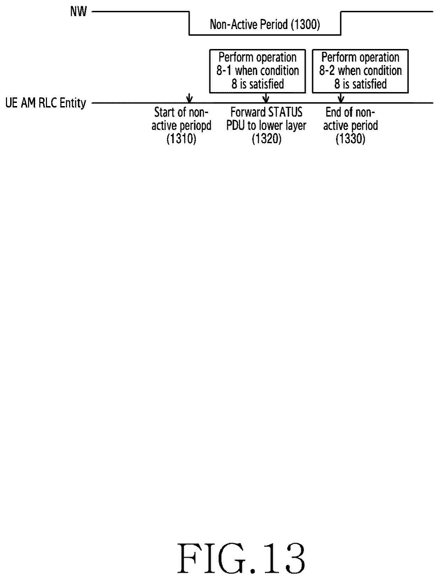

FIG. 13 illustrates a method in which an AM RLC entity controls a t-StatusProhibit timer considering a NW non-active period according to various embodiments of the disclosure.

Referring to FIG. 13, in a NW non-active period 1300, when an AM RLC entity of a UE transmits a STATUS PDU to a lower layer (e.g., at least one of MAC or PHY layers), if condition 8 is satisfied, the AM RLC entity of the UE may perform operation 8. In an embodiment of the disclosure, condition 8 may include at least one of the following conditions.
> The RLC entity is configured to perform rlcEnhNes.
> The time of transmitting the STATUS PDU to the lower layer (e.g., at least one of the MAC or PHY layers) falls within the NW non-active period
> When the time of transmitting the STATUS PDU to the lower layer (e.g., at least one of the MAC or PHY layers) falls within the NW non-active period, the remaining time of the NW non-active period is greater than (or equal to or greater than) threshold 8.
>When the time of transmitting the STATUS PDU to the lower layer (e.g., at least one of the MAC or PHY layers) falls within the NW non-active period, the remaining time of the NW non-active period is less than (or less than or equal to) threshold 8.

In an embodiment of the disclosure, operation 8 may include at least one of the following procedures.
> Operation 8-1: Upon submission of the STATUS PDU to the lower layer (1320), the transmitting side of the AM RLC entity shall
   >> Start and immediately suspend t-StatusProhibit
> Operation 8-2: Resume t-StatusProhibit if t-StatusProhibit is suspended at the end 1330 of the NW non-active period

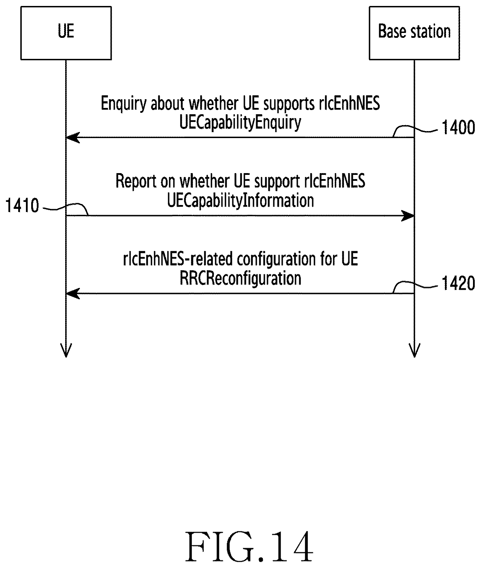

FIG. 14 is a diagram illustrating an RRC signaling procedure performed by a UE and a base station to perform an rlcEnhNes-related operation according to various embodiments of the disclosure. The diagram illustrates a procedure in which the base station and the UE identify whether the UE supports an enhanced RLC timer control function (rlcEnhNes) considering NES through RRC signaling and configures an rlcEnhNes-related configuration. For example, the diagram illustrates a signaling procedure performed by the UE and the base station to perform an rlcEnhNes-related operation.

Referring to FIG. 14, the base station may forward (or transmit) a UECapabilityEnquiry message 1400 for requesting a capability report to the UE in a connected state (e.g., an RRC CONNETED state). The base station may include a UE capability request for each radio access technology (RAT) type in the UECapabilityEnquiry message 1400. The UE capability request for each RAT type may include information about a requested frequency band.

When the base station requests the UE to generate a UECapabilityInformation message 1410 to through the UECapabilityEnquiry message 1400, the base station may include filtering information that may indicate a condition and a restriction. Here, the base station may indicate whether the UE needs to report whether the UE supports rlcEnhNes through the filtering information.

The UE may configure the UECapabilityInformation message 1410 corresponding to the UECapabilityEnquiry message 1400, and may report (or transmit) the UECapabilityInformation message to the base station in response to the UECapabilityEnquiry message 1400. The UECapabilityInformation message 1410 may include a parameter indicating whether the UE supports rlcEnhNes.

For example, the parameter may be 1-bit information. When the parameter is included, it may be indicated that rlcEnhNes is supported, and when the parameter is not included, it may be indicated that rlcEnhNes is not supported. The base station may determine whether the UE supports rlcEnhNes, based on the UECapabilityInformation message 1410 received from the UE.

When determining that the UE supports rlcEnhNes, the base station may indicate an RRCReconfiguration message 1420 including an rlcEnhNes-related configuration to the UE. The UE may apply rlcEnhNes-related configuration information included in the RRCReconfiguration message 1420 received from the base station.

Specifically, for the rlcEnhNes-related configuration, the RRCReconfiguration message 1420 may include at least one of the following pieces of information. However, the disclosure is not limited to the following example.
> An RLC entity to perform rlcEnhNes may be indicated. The indication may be configured per UE/cell Group/DRB/LCH/cell.
> A threshold used for an rlcEnhNes-related operation may be included. The threshold may include at least one of threshold 1, threshold 2, threshold 3, threshold 4, threshold 5, threshold 6, threshold 7, or threshold 8 mentioned in the embodiments of the disclosure.

Upon receiving the RRCReconfiguration message 1420, the UE may update related information (e.g., rlcEnhNes-related configuration information), based on the information included in the RRCReconfiguration message 1420 when the rlcEnhNes-related configuration information included in the RRCReconfiguration message 1420 is already configured.

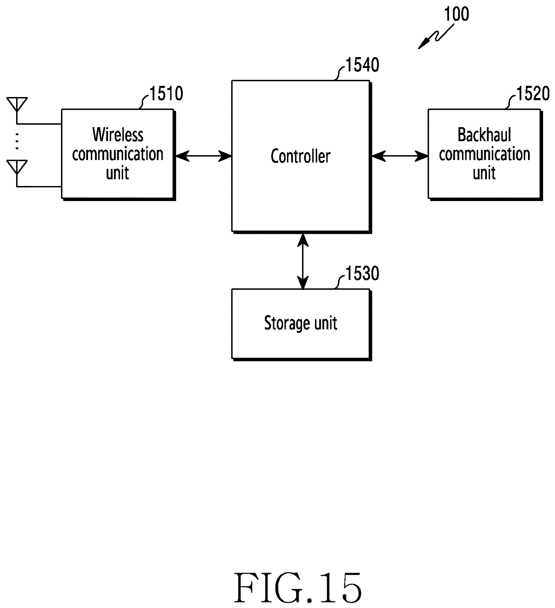

FIG. 15 illustrates a structure of a base station in a wireless communication system according to various embodiments of the disclosure. The structure illustrated in FIG. 15 may be understood as a structure of the base station 100 in FIG. 1. As used herein, such terms as "... unit" and "... er" refer to a unit configured to process at least one function or operation, and may be implemented as hardware, software, or a combination of hardware and software.

Referring to FIG. 15, the base station 100 includes a wireless communication unit 1510, a backhaul communication unit 1520, a storage unit 1530, and a controller 1540.

The wireless communication unit 1510 performs functions for transmitting/receiving signals through a radio channel. For example, the wireless communication unit 1510 performs functions of conversion between baseband signals and bitstrings according to the physical layer specifications of the system. For example, during data transmission, the wireless communication unit 1510 encodes and modulates a transmitted bitstring to generate complex symbols. In addition, during data reception, the wireless communication unit 1510 demodulates and decodes a baseband signal to reconstruct a received bitstring.

In addition, the wireless communication unit 1510 up-converts a baseband signal to an RF band signal, transmits the same through an antenna, and down-converts an RF band signal received through the antenna to a baseband signal. To this end, the wireless communication unit 1510 may include a transmission filter, a reception filter, an amplifier, a mixer, an oscillator, a digital to analog converter (DAC), an analog to digital converter (ADC), and the like. In addition, the wireless communication unit 1510 may include multiple transmission/reception paths. Furthermore, the wireless communication unit 1510 may include at least one antenna array including multiple antenna elements.

In terms of hardware, the wireless communication unit 1510 may include a digital unit and an analog unit, and the analog unit may include multiple sub-units according to operation power, frequencies, etc. The digital unit may be implemented by at least one digital signal processor (DSP).

The wireless communication unit 1510 transmits and receives signals as described above. Accordingly, all or part of the wireless communication unit 1510 may be referred to as a "transmitter", a "receiver", or a "transceiver". In addition, as used in the following description, the meaning of "transmission and reception performed through a radio channel" includes the meaning that the above-described processing is performed by the wireless communication unit 1510.

The backhaul communication unit 1520 provides an interface for performing communication with other nodes in the network. That is, the backhaul communication unit 1520 converts a bitstring, transmitted from the base station to any other node, for example, any other access node, any other base station, an upper node, or a core network, into a physical signal, and converts a physical signal, received from any other node, into a bitstring.

The storage unit 1530 may store basic programs, application programs, and data, such as configuration information, for operation of the main base station. The storage unit 1530 may include a volatile memory, a nonvolatile memory, or a combination of a volatile memory and a nonvolatile memory. In addition, the storage unit 1530 provides the stored data at the request of the controller 1540.

The controller 1540 controls the overall operation of the base station. For example, the controller 1540 transmits/receives signals through the wireless communication unit 1510 or the backhaul communication unit 1520. In addition, the controller1540 records data in the storage unit 1530 and reads the data from the storage unit 1530. Furthermore, the controller 1540 may perform functions of protocol stacks required by communication specifications. According to another embodiment, the protocol stack may be included in the wireless communication unit 1510. To this end, the controller 1540 may include at least one processor.

According to various embodiments, the controller 1540 may control the base station to perform operations according to various embodiments.

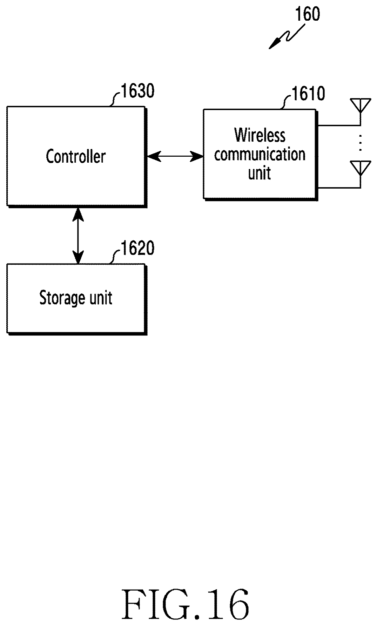

FIG. 16 illustrates a structure of a UE in a wireless communication system according to various embodiments of the disclosure. The structure illustrated in FIG. 16 may be understood as a structure of the UE 160 in FIG 2. As used herein, such terms "... unit" and "-er" refer to a unit configured to process at least one function or operation, and may be implemented as hardware, software, or a combination of hardware and software.

Referring to FIG. 16, the UE may include a communication unit 1610, a storage unit 1620, and a controller 1630.

The communication unit 1610 performs functions for transmitting/receiving signals through a radio channel. For example, the communication unit 1610 performs functions of conversion between baseband signals and bitstrings according to the physical layer specifications of the system. For example, during data transmission, the communication unit 1610 generates complex symbols by encoding and modulating a transmission bitstream. In addition, during data reception, the communication unit 1610 demodulates and decodes a baseband signal to restore a received bitstring. In addition, the communication unit 1610 up-converts a baseband signal to an RF band signal, transmits the same through an antenna, and down-converts an RF band signal received through the antenna to a baseband signal. For example, the communication unit 1610 may include a transmission filter, a reception filter, an amplifier, a mixer, an oscillator, a DAC, and an ADC.

In addition, the communication unit 1610 may include multiple transmission/reception paths. Moreover, the communication unit 1610 may include at least one antenna array including multiple antenna elements. In terms of hardware, the communication unit 1610 may include a digital circuit and an analog circuit (e.g., a radio frequency integrated circuit (RFIC)). The digital circuit and analog circuit may be implemented as a single package. In addition, the communication unit 1610 may include multiple RF chains. Furthermore, the communication unit 1610 may perform beamforming.

The communication unit 1610 transmits and receives signals as described above. Accordingly, all or part of the communication unit 1610 may be referred to as a "transmitter", a "receiver", or a "transceiver". In addition, as used in the following description, the meaning of "transmission and reception performed through a radio channel" includes the meaning that the above-described processing is performed by the communication unit 1610.

The storage unit 1620 may store basic programs, application programs, and data, such as configuration information, for operation of the main base station. The storage unit 1620 may include a volatile memory, a nonvolatile memory, or a combination of a volatile memory and a nonvolatile memory. In addition, the storage unit 1620 provides the stored data at the request of the controller 1630.

The controller 1630 controls the overall operation of the UE. For example, the controller 1630 transmits/receives signals through the communication unit 1610. In addition, the controller1630 records data in the storage unit 1620 and reads the data from the storage unit 1620. In addition, the controller 1630 may perform functions of protocol stacks required by communication specifications. To this end, the controller 1630 may include at least one processor or microprocessor, or may be a part of a processor. In addition, a part of the communication unit 1610 and the controller 1630 may be referred to as a communication processor (CP).

According to various embodiments, the controller 1630 may control the UE to perform operations according to various embodiments as described below.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

## Claims

1. A method performed by a radio link control (RLC) layer of a terminal in a wireless communication system, the method comprising:
receiving, from a base station, configuration information on at least one of discontinuous transmission (DTX) or discontinuous reception (DRX) of at least one cell associated with the RLC layer;
identifying a non-active period of a network, based on the configuration information; and
performing a first operation, based on a timer related to the DTX or the DRX, in the non-active period,
wherein the network comprises the at least one cell, and
wherein the non-active period comprises a non-active period common to the at least one cell.

2. The method of claim 1, wherein, in case that the RLC layer is an unacknowledged mode (UM) RLC layer and an expected expiry time of the timer falls within the non-active period, the first operation comprises initializing the timer, and
wherein the timer is a t-Reassembly timer.

3. The method of claim 1, wherein, in case that the RLC layer is an acknowledged mode (AM) RLC layer and an expected expiry time of the timer falls within the non-active period, the first operation comprises initializing the timer and triggering status reporting to the base station, and
wherein the timer is a t-Reassembly timer.

4. The method of claim 1, wherein the first operation comprises stopping the timer until the non-active period expires, and
wherein the timer is a t-Reassembly timer, a t-PollRetransmit timer, or a t-StatusProhibit timer.

5. The method of claim 1, wherein, in case that the RLC layer is an AM RLC layer and transmits an AM data (AMD) protocol data unit (PDU) comprising a poll to a medium access control (MAC) layer or a physical (PHY) layer in the non-active period, the first operation comprises stopping the timer until the non-active period expires, and
wherein the timer is a t-PollRetransmit timer.

6. The method of claim 1, wherein, in case that the RLC layer is an AM RLC layer and transmits a status PDU to a MAC layer or a PHY layer in the non-active period, the first operation comprises stopping the timer until the non-active period expires, and
wherein the timer is a t-StatusProhibit timer.

7. The method of claim 1, wherein the configuration information is based on terminal capability information on the terminal, and
wherein the terminal capability information comprises information on whether the terminal supports the first operation in the non-active period.

8. The method of claim 1, wherein the configuration information is included in a radio resource control (RRC) reconfiguration message, and
wherein the information comprises at least one threshold value related to the non-active period.

9. A radio link control (RLC) layer of a terminal in a wireless communication system, the RRC layer comprising:
a transceiver; and
at least one controller connected to the transceiver,
wherein the at least one controller is configured to:
receive, from a base station, configuration information on at least one of discontinuous transmission (DTX) or discontinuous reception (DRX) of at least one cell associated with the RLC layer;
identify a non-active period of a network, based on the configuration information; and
perform a first operation, based on a timer related to the DTX or the DRX, in the non-active period,
wherein the network comprises the at least one cell, and
wherein the non-active period comprises a non-active period common to the at least one cell.

10. The RLC layer of claim 9, wherein, in case that the RLC layer is an unacknowledged mode (UM) RLC layer and an expected expiry time of the timer falls within the non-active period, the first operation comprises initializing the timer, and
wherein the timer is a t-Reassembly timer.

11. The RLC layer of claim 9, wherein, in case that the RLC layer is an acknowledged mode (AM) RLC layer and an expected expiry time of the timer falls within the non-active period, the first operation comprises initializing the timer and triggering status reporting to the base station, and
wherein the timer is a t-Reassembly timer.

12. The RLC layer of claim 9, wherein the first operation comprises stopping the timer until the non-active period expires, and
wherein the timer is a t-Reassembly timer, a t-PollRetransmit timer, or a t-StatusProhibit timer.

13. The RLC layer of claim 9, wherein, in case that the RLC layer is an AM RLC layer and transmits an AM data (AMD) protocol data unit (PDU) comprising a poll to a medium access control (MAC) layer or a physical (PHY) layer in the non-active period, the first operation comprises stopping the timer until the non-active period expires, and
wherein the timer is a t-PollRetransmit timer.

14. The RLC layer of claim 9, wherein, in case that the RLC layer is an AM RLC layer and transmits a status PDU to a MAC layer or a PHY layer in the non-active period, the first operation comprises stopping the timer until the non-active period expires, and
wherein the timer is a t-StatusProhibit timer.

15. The RLC layer of claim 9, wherein the configuration information is based on terminal capability information on the terminal, and
wherein the terminal capability information comprises information on whether the terminal supports the first operation in the non-active period.
